# EUROPÄISCHE PATENTSCHRIFT

(11) **EP 1 493 793 B1**
(45) Veröffentlichungstag und Bekanntmachung des Hinweises auf die Patenterteilung: **17.01.2007**
(21) Anmeldenummer: 04015186.2
(22) Anmeldetag: 29.06.2004
(51) Int. Cl.: C09J 131/04, C08F 2/20, C08F 118/08, B32B 7/12

(54) **Wässrige Klebstoffzusammensetzung**
Aqueous adhesive composition
Composition adhésive aqueuse

(30) Priorität: 30.06.2003 DE 10329594
(43) Veröffentlichungstag der Anmeldung: 05.01.2005
(73) Patentinhaber: Follmann & Co. Gesellschaft für Chemie-Werkstoffe und -Verfahrenstechnik mbH & Co. KG, 32423 Minden (DE)
(72) Erfinder: Scholtyssek, Werner, 31547 Rehburg-Loccum (DE); Brandt, Holger, 31655 Stadthagen (DE); Röbke, Kai, 31708 Ahnsen (DE); Walking, Ulf, 31675 Bückeburg (DE)
(74) Vertreter: König, Gregor Sebastian

(56) Entgegenhaltungen:
- EP-A- 0 692 494
- EP-A- 1 088 835
- EP-A- 1 300 421
- DATABASE CHEMABS [Online] CHEMICAL ABSTRACTS SERVICE, COLUMBUS, OHIO, US; TAKADA, SHIGEKI: XP002299545 gefunden im STN Database accession no. 126:31780 & JP 08 259609 A2 (KURARAY CO, JAPAN) 8. Oktober 1996 (1996-10-08)

## Beschreibung

Die Erfindung betrifft einen Klebstoff, vorzugsweise einen Polyvinylacetatklebstoff in wässeriger Dispersion.

Polyvinylacetat ist aufgrund geringer Kosten in der Herstellung und Verarbeitung und zudem guter Umweltverträglichkeit insbesondere für Holz ein bevorzugter Klebstoff.

Da Polyvinylacetat jedoch eine mangelnde Wasser- und Wärmestandfestigkeit aufweist, wird im Stand der Technik seit langem versucht, Polyvinylacetatzusammensetzungen zur Verfügung zu stellen, die im Hinblick auf ihre Wasserbeständigkeit und Wärmestandfestigkeit verbesserte Eigenschaften aufweisen. Hierzu sind insbesondere Copolymerisate mit hydrophoberen oder quervernetzbaren Monomeren und Mischungen mit anderen Polymeren entwickelt worden. So sind hochwasserbeständige Holzleime unter Verwendung von Polyvinylacetat, Polyvinylalkohol als Schutzkolloid und einem vernetzbaren Monomer entwickelt worden, die den Anforderungen der Beanspruchungsgruppen D3 und D4 nach DIN EN 204 genügen. In der Praxis führen verbesserte Eigenschaften in einer Hinsicht jedoch meist zu Schwierigkeiten bezüglich einer anderen Eigenschaft.

Teilweise hydrolysierte Polyvinylalkohole als Dispergiermittel weisen eine mangelnde Wasserbeständigkeit auf. Auch bei der Verwendung von vollständig hydrolysiertem Polyvinylalkohol werden keine zufriedenstellenden Wasserbeständigkeiten erreicht und zudem weist dieser eine geringe Lagerstabilität und schlechte Verarbeitbarkeit auf. Auch Mischungen dieser Stoffe haben bislang nicht zu zufriedenstellenden Ergebnissen geführt.

Um die gewünschte Wasserbeständigkeit zu erreichen, wurden schließlich Polyvinylalkohole mit hohem, mindestens 95Mol% Hydrolysegrad in modifizierter Form eingesetzt. Der modifizierte Polyvinylalkohol wies einen Ethyleneinheitengehalt von 2 bis 9 Mol% auf. Diese Klebstoffzusammensetzung sollte auch den Verzicht auf einen Vernetzer ermöglichen.

Der hinsichtlich seiner Wasserbeständigkeit vorteilhafte Klebstoff unter Verwendung des modifizierten Polyvinylalkohols wies jedoch erhebliche Nachteile bei der Herstellung auf. So bildete der Klebstoff bei der praktischen Anwendung keinen homogenen Film aus. Vielmehr war die Bildung von Koagulaten zu beobachten.

Um einen homogenen Film zu erlangen, wurde daher schließlich versucht, mit einem Emulgator als Zusatzstoff den wasserbeständigeren Klebstoff für die industrielle Anwendung verwertbar zu machen. Die Zugabe des Emulgators löste zwar das Problem der Verarbeitbarkeit, jedoch wurde dadurch die Wasserbeständigkeit des Klebstoffs wiederum erheblich reduziert, so daß diese Vorteile des Klebstoffs in der praktischen Anwendung verloren gingen.

Der vorliegenden Erfindung liegt die Aufgabe zugrunde, eine Klebstoffzusammensetzung mit hoher Wasserbeständigkeit und verbesserten rheologischen Eigenschaften bereitzustellen.

Gelöst wird diese Aufgabe durch einen Klebstoff in vorzugsweise wässeriger Dispersionsform, der ein Dispersoid eines Polymers eines ethylenisch ungesättigten Monomers sowie ein erstes Dispergiermittel aus einem modifizierten Polyvinylalkohol mit einem Ethyleneinheitengehalt unter 20Mol%, vorzugsweise von 2 bis 9 Mol%, insbesondere bevorzugt von 3 bis 8 Mol%, sowie als weiteres Dispergiermittel Polyvinylalkohol aufweist. In der Zugabe des Polyvinylalkohols liegt der Kern der Erfindung. Der Polyvinylalkohol führt in vorteilhafter Weise dazu, dass die rheologischen Eigenschaften des Klebstoffs in erheblichem Maße verbessert werden. Der erfindungsgemäße Klebstoff bildet einen homogenen Klebefilm aus und zeigt keine Neigung zu Koagulatbildung. Der erfindungsgemäße Klebstoff kann daher auch maschinell leicht verarbeitet werden, so dass er auch im industriellen Bereich weitreichend eingesetzt werden kann. Durch die verbesserten rheologische Eigenschaften ist der erfindungsgemäße Klebstoff den im Stand der Technik bekannten überlegen; dies insbesondere auch in Hinblick darauf, daß die rheologischen Eigenschaften, Plastizität, Elastizität und Viskosität vermehrt an Bedeutung gewinnen und im starken Maße bei der Dosierung der Klebstoffe, der Herstellung der Klebschicht und der Beschreibung des Aushärtevorgangs von Bedeutung sind.

Die Zugabe des Polyvinylalkohols als zusätzliches Dispergiermittel zu dem die hohe Wasserbeständigkeit verursachenden modifizierten Polyvinylalkohol führt in überraschender Weise zu keinem Verlust der Wasserbeständigkeit.

Die Erfindung basiert folglich auf der Erkenntnis, dass die im Stand der Technik bekannte Annahme (siehe bspw. EP 0 699 697), dass die Zugabe eines Polyvinylalkohols die Wasserbeständigkeit und Verarbeitbarkeit nachteilig beeinflusst, unzutreffend ist. Bei der erfindungsgemäßen Kombination konnte ein solcher Verlust der Wasserbeständigkeit nicht beobachtet werden, sondern nur - wie ausgeführt - eine deutliche Verbesserung der für die Verarbeitung des Klebstoffes wichtigen Eigenschaften, wie z.B. auch der Stabilität. Dies gilt auch bei Verwendung eines vollständig hydrolysierten Polyvinylalkohols. Daher ist es trotz des Einsatzes des Polyvinylalkohols nicht erforderlich, Vernetzer, wie beispielsweise Isocyanat, zuzugeben, um die Wasserbeständigkeit auf hohem Niveau zu halten.

Als Ausgangsmaterial für das Polymerdispersoid können ethylenisch ungesättigten Monomere verwendet werden. Beispiele für derartige Monomere schließen Olefine wie Ethylen, Propylen und Isobutylen; halogenierte Olefine wie Vinylchlorid oder Vinylidenfluorid; Acrylsäureester wie beispielsweise Acrylsäure, Methylacrylat, Ethylacrylat, Methacrylsäure; Methacrylsäureester wie Methylmethacrylat; Dimethylaminoethylacrylat, Dimethylaminoethylacrylat und deren quarternäre Verbindungen; Acrylamidmonomere; Styrolmonomere; N-Vinylpyrrolidon; Dienmonomere, wie Butadien, Isopropen und Chloropren; Vinylester wie Vinylformiat, Vinylacetat, Vinylpropionat und Vinylversatat, ein. Beispielsweise können die in der DE 695 04 151 als bevorzugte Beispiele für das ethylenisch ungesättigte Monomer genannten, allein oder in Kombination von zwei oder mehreren davon, eingesetzt werden. Auf die Offenbarung der DE 695 04 151 wird bezüglich des vorzugsweise mit der vorliegenden Erfindung einzusetzenden Polymerdispersoid vollumfänglich Bezug genommen.

Der erfindungsgemäße Klebstoff ist vorzugsweise frei von einem Copolymer als Dispersoid, das eine primäre Hydroxygruppe enthaltende ethylenisch ungesättigte Monomereinheiten aufweist, wie sie beispielsweise in der DE 692 29 921 beschrieben sind. Die Verwendung dieser Monomere hat den Nachteil, daß insbesondere bei Wärme und UV-Strahlung eine Selbstvernetzung auftreten kann, die zu einer Verminderung der Klebeeigenschaften und Beeinträchtigung der Verarbeitbarkeit führen kann.

Bevorzugt wird als Dispersoid Polyvinylacetat verwendet. Der Mengenanteil kann bezogen auf die Dispersion vorzugsweise bei 40 bis 60 Gew.-%, insbesondere 45 bis 55 Gew.-% liegen. Des weiteren ist es beispielsweise möglich, dass das Polyvinylacetat einen Polymerisationsgrad von 100 bis 2500 aufweist.

Der erfindungsgemäß modifizierte Polyvinylalkohol wird vorzugsweise durch Hydrolyse eines Copolymers von Vinylester und Ethylen erhalten. Beispiele für den Vinylester schließen Vinylformiat, Vinylacetat, Vinylpropionat und Vinylpivalat ein, wobei Vinylacetat bevorzugt ist. Der modifizierte Polyvinylalkohol weist vorzugsweise einen Hydrolysegrad von mindestens 95% auf.

Als modifizierter Polyvinylalkohol können auch verschiedene Copolymere eines ethylenisch ungesättigten Monomeres verwendet werden, soweit die erfindungsgemäße Wirkung nicht beeinträchtigt wird. Beispiele für ethylenisch ungesättigte Monomere schließen Acrylsäure, Methacrylsäure, (wasserfreie) Phthalsäure, (wasserfreie) Maleinsäure, (wasserfreie) Itaconsäure, Acrylnitril, Methacrylnitril, Acrylamid, Methacrylamid, Trimethyl-(3-acrylamid-3-dimethylpropyl)ammoniumchlorid, Acrylamid-2-methylpropansulfonat und dessen Natriumsalz, Ethylvinylether, Butylvinylether, N-Vinylpyrrolidon, Vinylchlorid, Vinylbromid, Vinylfluorid, Vinylidenchlorid, Vinylidenfluorid, Tetrafluroethylen, Natriumvinylsulfonat und Natriumarylsulfonat ein. Bevorzugt werden solche mit den in der DE 695 04 151 genannten Eigenschaften eingesetzt. Auf die Offenbarung der DE 695 04 151 wird daher vollumfänglich Bezug genommen.

Vorzugsweise wird als modifizierter Polyvinylalkohol erfindungsgemäß ein Ethylen-Vinylalkohol-Copolymer eingesetzt. Dieses weist vorzugsweise einen Polymerisationsgrad von 100 bis 8000, besonders bevorzugt von 350 bis 3500, insbesondere bevorzugt von 500 bis 1200, auf. Hinsichtlich des Hydrolysegrades ist es bevorzugt, daß das Ethylen-Vinylalkohol-Copolymer einen Hydrolysegrad von 88 bis 100 Mol%, insbesondere von 95 bis 100 Mol%, aufweist. Ferner ist bevorzugt, daß der Klebstoff das Ethylen-Vinylalkohol-Copolymer in einem Mengenanteil von 1 bis 3 Gew.-%, insbesondere 1,5 bis 2,8 Gew.-% - bezogen auf die Dispersion - enthält.

Die erfindungsgemäß eingesetzten Vinylalkoholpolymere weisen vorzugsweise einen Polymerisationsgrad von 1500 bis 3000, insbesondere von 2000 bis 2500, auf. Bezüglich des Hydrolysegrades ist es bevorzugt, dass die Vinylalkoholpolymere einen Hydrolysegrad von 81 bis 100 Mol%, insbesondere von 85 bis 92 Mol% aufweisen. Hinsichtlich des in der Dispersion eingesetzten Mengenanteils ist es bevorzugt, dass die Vinylalkoholpolymere mit einem Anteil von 0,6 bis 2,5 Gew.-%, insbesondere von 1,0 bis 2 Gew.-%, in der Dispersion enthalten sind.

Gemäß einer vorteilhaften Weiterbildung können mehrere Polyvinylalkohole als Dispergiermittel eingesetzt werden. Eine bevorzugte Variante ist in Anspruch 12 definiert.

Die erfindungsgemäße Klebstoffzusammensetzung kann neben den bereits Erwähnten noch weitere Zusatzstoffe aufweisen, die üblicherweise für Klebstoffe verwendet werden. Diese können in geeigneter Weise kombiniert werden, um auch Feineinstellungen hinsichtlich der Trocknungs- und Abbindecharakteristik, der Viskosität und Filmbildungseigenschaften einzustellen. Beispiele für solche Bestandteile sind organische Lösungsmittel, wasserlösliche Polymere, wie Stärken, modifizierte Stärken, oxydierte Stärken, Methylcellulosen, Carboxymethylcellulosen und Copolymere von Maleinsäureanhydrid und Isobuten, von Maleinsäuranhydrid und Styrol und von Maleinsäureanhydrid und Methylvinylether sowie wärmehärtbare Harze, die üblicherweise als Klebstoff verwendet werden, Tenside, Entschäumer und/oder Filmbildehilfsmittel. Ferner können weitere Füllstoffe wie Ton, Kaolin, Talkum, Calciumcarbonat und Holzmehl, Streckmittel, Reaktionsbeschleuniger, Pigmente, Dispergiermittel, Gefrierschutzmittel, Konservierungsmittel und Rostschutzmittel zugesetzt werden, sofern gewünscht und erforderlich.

Der erfindungsgemäße Klebestoff zeichnet sich durch eine hohe Wasserbeständigkeit, eine gute Verarbeitbarkeit durch Ausbildung eines homogenen Filmes sowie eine außergewöhnlich gute Adhäsion zu verschiedenen Materialien aus. Ferner zeichnet er sich durch eine hohe Verträglichkeit mit anderen Systemen sowie eine volle Füllstoffverträglichkeit, Wärmestandfestigkeit und Lagerbeständigkeit aus. Er kann daher für die Verklebung der unterschiedlichsten Materialien verwendet werden, so u.a. für Holz, Furniere, Kunststoffe, Vliese und Folien.

Besonders bevorzugt wird die erfindungsgemäße Klebstoffzusammensetzung als Holzleim eingesetzt. Ferner ist der erfindungsgemäße Klebstoff aufgrund seiner besonderen Fließeigenschaften schneller herstell- und verarbeitbar. Er ist prizipiell daher auch für die Beanspruchungsgruppen D1 bis D4 einsetzbar. Um die Anforderungen an die D4-Beanspruchungsgruppe zu erfüllen, kann es von Vorteil sein, zusätzlich einen Isocyanat-Härter zuzugeben. Dieser macht vorzugsweise einen Anteil von ca. 1 bis 10% an der Grunddispersion aus.

Gemäß einer vorteilhaften Weiterbildung weist die Dispersion einen pH-Wert von 5,5 bis 7,5, vorzugsweise von 6,2 bis 6,9 auf. Der pH-Wert wird vorzugsweise mit Natriumbicarbonat eingestellt.

Der erfindungsgemäße "neutrale" pH-Wert ist von besonderem Vorteil gegenüber den im Stand der Technik bekannten Klebstoffen. So tritt beispielsweise bei den im Stand der Technik bekannten Holzleimen häufig das Problem auf, dass sich das Holz im Zuge der Verklebung verfärbt. Dies ist insbesondere ein Problem bei der Verklebung von Substraten geringerer Materialstärke, so beispielsweise bei Furnieren. Ursache für die beobachteten meist rötlichen Verfärbungen in Verbindung mit einigen Holzarten wie beispielsweise Buche, Maple oder Black Cherry sind u.a. Reaktionen zwischen den im Stand der Technik bekannten, sauren Klebstoffsystemen und den Holzinhaltsstoffen. Diese Reaktionen werden umso sichtbarer, je geringer die Materialstärke ist. Aufgrund der Tatsache, dass die Materialstärke beispielsweise bei Furnieren in den letzten Jahren aus Kostengründen zunehmend reduziert wurde, kommt dieses Problem somit besonders deutlich zum Tragen. Diese Verfärbungen erzeugen hohe Kosten durch Fehlchargen und Reklamationen. Der erfindungsgemäße Klebstoff löst dieses Problem durch die Wahl des erfindungsgemäßen "neutralen" anstatt des im Stand der Technik bekannten sauren pH-Werts.

Ein weiterer Vorteil des erfindungsgemäß erreichbaren pH-Werts ist die deutlich reduzierte korrosive Wirkung des Systems gegenüber den im Stand der Technik bekannten und üblichen sauren Systemen. Die Beanspruchung von Rohrleitungen, Pumpen und Tankbehältern wird durch den neutralen pH-Wert wesentlich reduziert.

Durch die im Stand der Technik übliche saure Einstellung des Holzleims kann ferner eine Vorvernetzung im Gebinde stattfinden, was eine unerwünschte Erhöhung der Viskosität zur Folge hat. Bei einer solchen Vernetzung kann zudem in nachteiliger Weise Formaldehyd abgespalten werden. Zudem reagieren die sauer eingestellten Klebstoffsysteme empfindlich auf Sonneneinstrahlung und Wärme, so daß sie geschützt werden müssen. Diese Nachteile weist der erfindungsgemäße Klebstoff mit "neutralem" pH-Wert nicht auf. Aufgrund der hohen Wasserbeständigkeit des erfindungsgemäßen Klebstoffs kann der pH-Wert angehoben werden, ohne daß die Wasserbeständigkeit verloren geht. Dies ist bei den im Stand der Technik bekannten Systemen nicht der Fall; diese benötigen einen pH-Wert um ca. 3, da sonst die erforderlichen Wasserbeständigkeiten nicht erfüllt werden.

Mit dem erfindungsgemäßen Klebstoff können daher aus verschiedensten Materialien bestehende Bauteile verklebt werden. Ein solches Bauteil ist in Anspruch 13 definiert. Nachfolgend werden einige Beispiele aufgezählt.

In Anbetracht der Tatsache, dass der erfindungsgemäße Klebstoff sich insbesondere als Holzleim eignet, kann beispielsweise ein Holzbauteil aus mehreren Lagen hergestellt werden, wobei die Lagen durch den erfindungsgemäßen Klebstoff verklebt werden. Besonders vorteilhaft ist die Anwendung, wenn eine Lage des Holzbauteils ein Furnier ist. Als eine weitere Möglichkeit kann das Holzbauteil mit einer Flächenverleimung, vorteilhafterweise auf einer Hartlaminatplatte (CPL) oder einer Hochdrucklaminatplatte (HPL) ausgeführt sein. Ferner können auch Massivholzverleimungen durchgeführt werden.

Ferner ist es auch möglich, mehrere Kunststoff- oder Vlieslagen miteinander zu verkleben.

Nach einer weiteren Ausführungsform besteht die Möglichkeit, verschiedene Kunststofflagen miteinander zu verkleben, wobei die Verklebung eine Thermokaschierung (Dekor-Finish-Folie) sein kann. Ferner können die Lagen beispielsweise zweckmäßig geprimerte und Corona-vorbehandelte, Polypropylen-Folien darstellen oder auch unvorbehandelt sein.

Des weiteren ist es möglich, ein Bauteil aus mehreren Lagen bestehend aus hochverdichteten Faserplatten (HDF) und Aluminium herzustellen.

Die Verklebung selbst kann beispielsweise als Hochfrequenzverleimung erfolgen.

Die Erfindung wird nunmehr anhand eines Ausführungsbeispiel näher erläutert.

| | |
|---|---|
| 5 - 35 g | eines wasserlöslichen Ethylencopolymers und |
| 10 - 50 g | Polyvinylalkohol werden in |
| 50 - 500 g | Wasser eingerührt und unter Erhitzen gelöst. Die Temperatur der Lösung wird auf 65 bis 74° C eingestellt. Nach Zusatz von |
| 0,2 - 50 g | eines Emulgators, |
| 0,1 - 0,5 g | eines handelsüblichen Entschäumers werden weiterhin |
| 0,2 - 0,5 g | eines wasserlöslichen Polymerisationsinitiators und |
| 30 -60 g | Vinylacetat (ggf. mit einem oder mehreren Comonomeren) vorgelegt. |
| | |
| | Nach dem Polymerisationsstart, erkennbar an der beginnenden exothermen Reaktion, werden über 3 bis 6 Stunden weitere |
| | |
| 380 g -460 g | Vinylacetat (ggf. mit einem oder mehreren Comonomeren) zudosiert. |
| | |
| | Um die Nachreaktion einzuleiten, werden erneut |
| 0,05 - 0,3 g | eines wasserlöslichen Polymerisationsinitiators dem Ansatz zugegeben. |
| | |
| | Nach Ende der Nachreaktion wird die Dispersion mit Alkali auf pH 6,5 - 6,9 eingestellt und auf Raumtemperatur abgekühlt. Weiterhin sind |
| 1 - 3 g | eines handelsüblichen Konservierers und |
| 0,1 -20 g | eines Filmbildehilfsmittels einzurühren. |

Die Klebefestigkeit der erfindungsgemäßen Dispersion wurde nach EN 204/205 gemessen und ergab einen D3 Wert von 2,6 N/mm². Die rheologischen Eigenschaften waren ausgezeichnet. Vergleichsweise wurden im Stand der Technik bekannte Dispersionen nur unter Verwendung eines wasserlöslichen Ethylencopolymers hergestellt. Sie zeigten sehr schlechte Fließeigenschaften und wiesen erhöhte Anteile an Koagulat auf. Da dieser Klebstoff nicht zur industriellen Verarbeitung geeignet war, wurde die Klebefestigkeit nicht bestimmt. Um die rheologischen Eigenschaften zu verbessern, wurden vorbeschrieben ist - handelsübliche Emulgatoren zugesetzt. Dadurch wurden zwar die rheologischen Eigenschaften verbessert und der Koagulat - Anteil reduziert , jedoch verschlechterte sich die Wasserbeständigkeit. Die Klebefestigkeit dieser - verarbeitbaren - Dispersionen wurde nach EN 204/205 bestimmt und ergaben Werte unter 2,0 N/mm², so daß die Anforderungen nicht erfüllt waren.

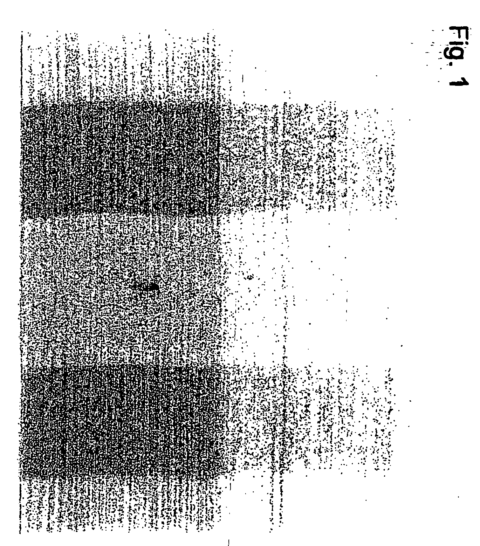

Fig. 1 zeigt eine Photographie, in der die positiven Eigenschaften des erfindungsgemäßen Klebstoffs im Vergleich mit zwei handelsüblichen D3 Holzleimen verdeutlicht werden. Der erfindungsgemäße Klebstoff, der die Anforderungen an die Beanspruchungsgruppe D3 erfüllt, ist mittig aufgetragen. Dieser weist einen "neutralen" pH-Wert von ca. 6,5 bis 6,9 auf. Links und rechts davon sind die Vergleichsleime aufgetragen. Diese weisen aufgrund ihres Vernetzungsmechanismus einen relativ stark sauren pH-Wert auf, der im Bereich von 3 bis 3,5 liegt. Wie in der Abbildung erkennbar ist, zeigen diese "sauren" Holzleime bei Kontakt mit dem Holz eine deutliche Rotverfärbung. Diese tritt insbesondere bei gerbsäurehaltigen oder anderen inhaltsstoffreichen Hölzern auf. Diese führt insbesondere bei Furnieren, und hier wiederum bei teuren Tropenholzfurnieren, zu den oben beschriebenen erheblichen Nachteilen. Beim mittig aufgetragenen erfindungsgemäßen Holzleim tritt diese kritische Verfärbung in vorteilhafter Weise nicht auf.

## Patentansprüche

1. Klebstoff in vorzugsweise wäßriger Dispersionsform, mit
- einem Dispersoid eines Polymers eines ethylenisch ungesättigten Monomers und
- einem ersten Dispergiermittel aus einem durch Ethyleneinheiten modifizierten Polyvinylalkohol mit einem Ethyleneinheitengehalt unter 20 Mol-%, vorzugsweise von 2 bis 9 Mol-%, insbesondere bevorzugt von 3 bis 8 Mol-%,
- ein Vinylalkoholpolymer als weiteres Dispergiermittel
**dadurch gekennzeichnet, daß**
- die Dispersion einen pH-Wert von 5,5 bis 7,5, vorzugsweise 6,2 bis 6,9, aufweist.

2. Klebstoff nach Anspruch 1, **dadurch gekennzeichnet, daß** er als Dispersoid Polyvinylacetat aufweist.

3. Klebstoff nach Anspruch 2, **dadurch gekennzeichnet, daß** das Polyvinylacetat einen Polymerisationsgrad von 100 bis 2 500 aufweist.

4. Klebstoff nach Anspruch 2 oder 3, **dadurch gekennzeichnet, daß** er Polyvinylacetat in einem Mengenanteil von 40 bis 60 Gew.%, insbesondere 45 bis 55 Gew.-%, bezogen auf die Dispersion aufweist.

5. Klebstoff nach einem oder mehreren der Ansprüche 1 bis 4, **dadurch gekennzeichnet, daß** der modifizierte Polyvinylalkohol ein Ethylen-Vinylalkohol-Copolymer ist.

6. Klebstoff nach Anspruch 5, **dadurch gekennzeichnet, daß** das Ethylen-Vinylalkohol-Copolymer einen Polymerisationsgrad von 100 bis 8000, vorzugsweise 350 bis 3500, besonders bevorzugt von 500 bis 1200, aufweist.

7. Klebstoff nach Anspruch 5 oder 6, **dadurch gekennzeichnet, daß** das Ethylen-Vinylalkohol-Copolymer einen Hydrolysegrad von 88 bis 100 Mol-% aufweist.

8. Klebstoff nach einem der Ansprüche 5 bis 7, **dadurch gekennzeichnet, daß** er das Ethylen-Vinylalkohol-Copolymer in einem Mengenanteil von 1 bis 3 Gew.-%, insbesondere 1,5 bis 2,8 Gew.-% bezogen auf die Dispersion, aufweist.

9. Klebstoff nach einem oder mehreren der Ansprüche 1 bis 8, **dadurch gekennzeichnet, daß** das wenigstens eine Vinylalkoholpolymer einen Polymerisationsgrad von 1500 bis 3000, insbesondere von 2000 bis 2500 aufweist.

10. Klebstoff nach einem oder mehreren der Ansprüche 1 bis 9, **dadurch gekennzeichnet, daß** das wenigstens eine Vinylalkoholpolymer einen Hydrolysegrad von 81 bis 100 Mol-%, insbesondere von 85 bis 92 Mol-% aufweist.

11. Klebstoff nach einem oder mehreren der Ansprüche 1 bis 10, **dadurch gekennzeichnet, daß** er das wenigstens eine Vinylalkoholpolymer in einem Mengenanteil von 0,6 bis 2,5 Gew.%, insbesondere von 1,0 bis 2,0 Gew.-% bezogen auf die Dispersion aufweist.

12. Klebstoff nach einem oder mehreren der Ansprüche 1 bis 11, **dadurch gekennzeichnet, daß** das Vinylalkoholpolymer aus einem ersten teilverseiften Polymer mit einem Polymerisationsgrad von 1500 bis 3000 und einem Hydrolysegrad von 88 bis 92 Mol-%, insbesondere 88 bis 89 Mol-%, sowie einer Viskosität von 15 bis 30 mPa. sec, insbesondere 20 bis 25mPa.sec, jeweils in 4%-iger wäßriger Lösung, in einem Mengenanteil von 0,1 bis 1,50 Gew.-%, insbesondere 0,3 bis 0,6 Gew.-%, bezogen auf die Dispersion,
und
einem weiteren teilverseiften Polymer mit einem Polymerisations- und Hydrolysegrad wie das erste teilverseifte Polymer und einer Viskosität von 30 bis 50 mPa.sec, insbesondere 35 bis 45 mPa.sec, jeweils in 4%-iger wäßriger Lösung, in einem Mengenanteil von 0,5 bis 1,5 Gew.-%, insbesondere von 0,8 bis 1,2 Gew.-%, bezogen auf die Dispersion,
besteht.

13. Aus wenigstens zwei Lagen zusammengesetztes Bauteil, **dadurch gekennzeichnet, daß** die Lagen durch einen Klebstoff nach einem oder mehreren der Ansprüche 1 bis 12 verbunden sind.

## Claims

1. Adhesive preferably in an aqueous dispersion form, comprising
- a dispersoid of a polymer of an ethylenically unsaturated monomer and
- a first dispersing agent made of a polyvinyl alcohol modified by ethylene units with an ethylene unit content below 20 mol.%, preferably of 2 to 9 mol.%, particularly preferably of 3 to 8 mol.%,
- a vinyl alcohol polymer as a further dispersing agent
**characterised in that**
- the dispersion has a pH of 5.5 to 7.5, preferably 6.2 to 6.9.

2. Adhesive according to claim 1, **characterised in that** it has polyvinyl acetate as the dispersoid.

3. Adhesive according to claim 2, **characterised in that** the polyvinyl acetate has a degree of polymerisation of 100 to 2,500.

4. Adhesive according to claim 2 or 3, **characterised in that** it has polyvinyl acetate in a quantity proportion of 40 to 60% by weight, in particular 45 to 55% by weight, based on the dispersion.

5. Adhesive according to one or more of claims 1 to 4, **characterised in that** the modified polyvinyl alcohol is an ethylene-vinyl alcohol copolymer.

6. Adhesive according to claim 5, **characterised in that** the ethylene-vinyl alcohol copolymer has a degree of polymerisation of 100 to 8,000, preferably 350 to 3,500, particularly preferably of 500 to 1,200.

7. Adhesive according to claim 5 or 6, **characterised in that** the ethylene-vinyl alcohol copolymer has a degree of hydrolysis of 88 to 100 mol.%.

8. Adhesive according to any one of claims 5 to 7, **characterised in that** it has the ethylene-vinyl alcohol copolymer in a quantity proportion of 1 to 3% by weight, in particular 1.5 to 2.8% by weight, based on the dispersion.

9. Adhesive according to one or more of claims 1 to 8, **characterised in that** the at least one vinyl alcohol polymer has degree of polymerisation of 1,500 to 3,000, in particular of 2,000 to 2,500.

10. Adhesive according to one or more of claims 1 to 9, **characterised in that** the at least one vinyl alcohol polymer has a degree of hydrolysis of 81 to 100 mol.%, in particular of 85 to 92 mol.%.

11. Adhesive according to one or more of claims 1 to 10, **characterised in that** it has the at least one vinyl alcohol polymer in a quantity proportion of 0.6 to 2.5% by weight, in particular of 1.0 to 2.0% by weight, based on the dispersion.

12. Adhesive according to one or more of claims 1 to 11, **characterised in that** the vinyl alcohol polymer consists of a first partly saponified polymer with a degree of polymerisation of 1,500 to 3,000 and a degree of hydrolysis of 88 to 92 mol.%, in particular 88 to 89 mol.% and a viscosity of 15 to 30 mPa.sec, in particular 20 to 25 mPa.sec, in each case in a 4% aqueous solution, in a quantity proportion of 0.1 to 1.50% by weight, in particular 0.3 to 0.6% by weight, based on the dispersion, and
a further partly saponified polymer with a degree of polymerisation and hydrolysis like the first partly saponified polymer and a viscosity of 30 to 50 mPa.sec, in particular 35 to 45 mPa.sec, in each case in a 4% aqueous solution, in a quantity proportion of 0.5 to 1.5% by weight, in particular of 0.8 to 1.2% by weight, based on the dispersion.

13. Component composed of at least two layers, **characterised in that** the layers are connected by an adhesive according to one or more of claims 1 to 12.

## Revendications

1. Colle de préférence sous la forme d'une dispersion aqueuse, comportant
- un dispersoïde d'un polymère d'un monomère insaturé en éthylène et
- un premier agent dispersant composé d'un alcool polyvinylique modifié par des motifs éthylène et ayant une teneur en motifs éthylène inférieure à 20 % en moles, de préférence comprise entre 2 et 9 % en moles, de façon particulièrement préférée entre 3 et 8 % en moles.
- un polymère d'alcool vinylique en tant qu'autre agent dispersant,
**caractérisé en ce que**
- la dispersion présente une valeur de pH comprise entre 5,5 et 7,5, de préférence entre 6,2 et 6,9.

2. Colle selon la revendication 1, **caractérisée en ce qu'**elle présente en tant que dispersoïde un acétate de polyvinyle.

3. Colle selon la revendication 2, **caractérisée en ce que** l'acétate de polyvinyle présente un degré de polymérisation compris entre 100 et 2 500.

4. Colle selon la revendication 2 ou 3, **caractérisée en ce qu'**elle présente l'acétate de polyvinyle selon une fraction en quantité comprise entre 40 et 60 % en masse, en particulier entre 45 et 55 % en masse, sur la base de la dispersion.

5. Colle selon l'une ou plusieurs des revendications 1 à 4, **caractérisée en ce que** l'alcool polyvinylique modifié est un copolymère d'éthylène - alcool vinylique.

6. Colle selon la revendication 5, **caractérisée en ce que** le copolymère d'éthylène - alcool vinylique présente un degré de polymérisation compris entre 100 et 8 000, de préférence entre 350 et 3 500, de façon particulièrement préférée entre 500 et 1 200.

7. Colle selon la revendication 5 ou 6, **caractérisée en ce que** le copolymère d'éthylène - alcool vinylique présente un degré d'hydrolyse compris entre 88 et 100 % en mole.

8. Colle selon l'une des revendications 5 à 7, **caractérisée en ce qu'**elle comprend le copolymère d'éthylène - alcool vinylique selon une fraction en quantité comprise entre 1 et 3 % en masse, en particulier entre 1,5 et 2,8 % en masse, sur la base de la dispersion.

9. Colle selon l'une ou plusieurs des revendications 1 à 8, **caractérisée en ce que** le au moins un polymère d'alcool vinylique présente un degré de polymérisation compris entre 1 500 et 3 000, en particulier entre 2 000 et 2 500.

10. Colle selon l'une ou plusieurs des revendications 1 à 9, **caractérisée en ce que** le au moins un polymère d'alcool vinylique présente un degré d'hydrolyse compris entre 81 et 100 % en moles, en particulier entre 85 et 92 % en moles.

11. Colle selon l'une ou plusieurs des revendications 1 à 10, **caractérisée en ce qu'**elle comprend le au moins un polymère d'alcool vinylique selon une fraction en quantité comprise entre 0,6 et 2,5 % en masse, en particulier entre 1,0 et 2,0 % en masse, sur la base de la dispersion.

12. Colle selon l'une ou plusieurs des revendications 1 à 11, **caractérisée en ce que** le polymère d'alcool vinylique se compose d'un premier polymère partiellement saponifié présentant un degré de polymérisation compris entre 1 500 et 3 000 et un degré d'hydrolyse compris entre 88 et 92 % en moles, en particulier entre 88 et 89 % en moles, ainsi qu'une viscosité comprise entre 15 et 30 mPa.s, en particulier entre 20 et 25 mPa.s, respectivement dans une solution aqueuse à 4 %, selon une fraction en quantité comprise entre 0,1 et 1,50 % en masse, en particulier entre 0,3 et 0,6 % en masse, sur la base de la dispersion, et
d'un autre polymère partiellement saponifié présentant un degré de polymérisation et un degré d'hydrolyse comme le premier polymère partiellement saponifié et une viscosité comprise entre 30 et 50 mPa.s, en particulier entre 35 et 45 mPa.s, respectivement dans une solution aqueuse à 4 %, selon une fraction en quantité comprise entre 0,5 et 1,5 % en masse, en particulier entre 0,8 et 1,2 % en masse, sur la base de la dispersion.

13. Élément de construction composé d'au moins deux couches, **caractérisé en ce que** les couches sont reliées par une colle selon l'une ou plusieurs des revendications 1 à 12.
